# EUROPÄISCHE PATENTANMELDUNG

(11) **EP 2 213 543 A1**
(43) Veröffentlichungstag der Anmeldung: **04.08.2010**
(21) Anmeldenummer: 09450157.4
(22) Anmeldetag: 07.09.2009
(51) Int. Cl.: B61B 12/10, B21D 53/26

(54) **Riemenscheibe für eine Seilbahnanlage und Bausatz zu deren Herstellung**

(30) Priorität: 29.01.2009 AT 1582009; 02.04.2009 AT 5282009
(71) Anmelder: Innova Patent GmbH, 6960 Wolfurt (AT)
(72) Erfinder: Fink, Günther, 6952 Hittisau (AU)
(74) Vertreter: Beer, Manfred

(57) **Zusammenfassung**

Riemenscheibe (61) für die Herstellung eines Riemengetriebes, insbesondere für den Antrieb von Verzögerungsrädern, Förderrädern und Beschleunigungsrädern in Seilbahnanlagen, welche in ihrem mittleren Bereich mit einer Nabe zu deren Verbindung mit einer Antriebswelle und an ihrem Umfang mit einer ringförmigen Riemenfläche (62), insbesondere einer Nut, für einen Antriebsriemen od.dgl. ausgebildet ist. Dabei besteht die Riemenscheibe (61) aus Stahlblech und ist die an deren Umfang vorgesehene Riemenfläche (62) durch Spaltung des Randes der Riemenscheibe (61) hergestellt.

## Beschreibung

Die gegenständliche Erfindung betrifft eine Riemenscheibe für ein Riemengetriebe, insbesondere für den Antrieb von Verzögerungsrädern, Förderrädern und Beschleunigungsrädern in Seilbahnanlagen, welche in ihrem mittleren Bereich mit einer Nabe zu deren Verbindung mit einer Antriebswelle und an ihrem Umfang mit mindestens einer ringförmigen Riemenfläche, insbesondere einer Nut, für einen Antriebsriemen od.dgl. ausgebildet ist.
Weiters betrifft die gegenständliche Erfindung einen Bausatz zur Herstellung von Riemenscheiben für ein Riemengetriebe.

Es ist bekannt, in Seilbahnanlagen mit kuppelbaren Fahrzeugen die Fahrzeuge längs Führungsschienen durch die Stationen hindurch zu führen. Beim Einfahren der Fahrzeuge in eine Seilbahnstation werden diese vom Trag- und Förderseil, welches z.B. mit einer Geschwindigkeit von 6m/sec bewegt wird, abgekuppelt und wird deren Geschwindigkeit mittels Verzögerungsrädern gegenüber der Geschwindigkeit des Trag- und Förderseiles vermindert. In der Folge werden die Fahrzeuge mittels Förderrädern mit einer konstanten Geschwindigkeit von z.B. 0,2m/sec bis 1m/sec durch den Ein- und Ausstiegsbereich hindurch bewegt, wobei sie von den Passagieren bestiegen bzw. verlassen werden. Hierauf werden die Fahrzeuge mittels Beschleunigungsrädern auf die Geschwindigkeit des Trag- und Förderseiles beschleunigt, worauf sie wiederum an das Trag- und Förderseil angekuppelt und hierdurch in die nächste Seilbahnstation bewegt werden.

Der Antrieb der Verzögerungsräder, der Förderräder und der Beschleunigungsräder für die Bewegung der Fahrzeuge durch die Seilbahnstationen hindurch erfolgt mittels einer Vielzahl von längs der Führungsbahn der Fahrzeuge angeordneten Paaren von Riemenscheiben, welche mit Antriebswellen verbunden sind, auf welchen sich Verzögerungsräder, Förderräder und Beschleunigungsräder, welche mit den Laufwerken der Fahrzeuge zusammenwirken, befinden. Dabei sind die beiden Riemenscheiben mit jeweils mindestens einer Riemenfläche für einen Antriebsriemen ausgebildet, wobei die in der Bewegungsbahn der Fahrzeuge aufeinanderfolgenden und einander zugeordneten beiden Riemenscheiben mittels der Antriebsriemen miteinander auf Verdrehung gekuppelt sind. Um den jeweils angestrebten Bewegungsablauf zu erzielen, weisen die Riemenflächen der beiden Riemenscheiben gleiche oder unterschiedliche Durchmesser auf. Sofern eine erste Riemenscheibe einen kleineren Durchmesser als die mit dieser gekuppelte zweite Riemenscheibe aufweist, wird die zweite Riemenscheibe mit einer gegenüber der ersten Riemenscheibe verringerten Geschwindigkeit verdreht, wodurch die durch diese Riemenscheiben verdrehten Antriebsräder für die Fahrzeuge mit abnehmender Geschwindigkeit verdreht werden, also diese Antriebsräder als Verzögerungsräder wirken. Sofern die beiden mittels der Antriebsriemen gekuppelten Riemenscheiben einen gleichen Durchmesser aufweisen, werden die durch diese Riemenscheiben verdrehten Antriebsräder für die Fahrzeuge mit der gleichen Geschwindigkeit verdreht, wodurch die durch diese Riemenscheiben verdrehten Antriebsräder für die Fahrzeuge mit einer konstanten Geschwindigkeit bewegt werden. Sofern eine erste Riemenscheibe einen größeren Durchmesser als die mit dieser gekuppelte zweite Riemenscheibe aufweist, wird die zweite Riemenscheibe mit einer gegenüber der ersten Riemenscheibe vergrößerten Geschwindigkeit verdreht, wodurch die durch diese Riemenscheiben verdrehten Antriebsräder mit ansteigender Geschwindigkeit bewegt werden, also diese als Beschleunigungsräder wirken.

Bekannte jeweils mit mindestens zwei Riemenflächen ausgebildete Paare von Riemenscheiben, welche aus einem Metall, wie Eisen oder Aluminium, bestehen, werden in einem Gussverfahren hergestellt, wobei sie spanabhebend bearbeitet werden müssen. Da für unterschiedliche konstruktive Gestaltungen bzw. für unterschiedliche Bewegungsabläufe eine Vielzahl von unterschiedlichen Durchmessern der jeweiligen Riemenflächen erforderlich sind, ist die Herstellung derartiger bekannter Riemenscheiben aufgrund der Vielzahl der unterschiedlichen Größen derselben sehr aufwändig.

Der gegenständlichen Erfindung liegt somit die Aufgabe zugrunde, eine Riemenscheibe zu schaffen, welche mit geringerem Aufwand herstellbar ist, als dies für aus einem Gussverfahren hergestellte Riemenscheiben der Fall ist. Diese Aufgabe wird erfindungsgemäß dadurch gelöst, dass die Riemenscheibe aus Stahlblech besteht und dass die an deren Umfang vorgesehene Riemenfläche durch Spaltung des Randes der Riemenscheibe hergestellt ist.

Vorzugsweise ist der mittlere Bereich der Riemenscheibe mit einer Auswölbung ausgebildet, mit welcher sie auf einen radialen Flansch der Antriebswelle aufsetzbar ist. Dabei ist vorzugsweise die Tiefe der Auswölbung in axialer Richtung angenähert gleich der halben Breite der Riemenfläche für den Antriebsriemen. Zur Bildung eines Riemengetriebes werden zwei Riemenscheiben längs der Seitenflächen der Auswölbungen aneinander zur Anlage gebracht und werden die aneinander liegenden Riemenscheiben miteinander mittels axial ausgerichteter Bolzen miteinander verbunden.
Weiters ist vorzugsweise die Riemenscheibe einerseits mit einer durchgehenden Ausnehmung und andererseits mit einer Beschriftung, welche durch die Ausnehmung der anliegenden Riemenscheibe hindurch sichtbar ist, ausgebildet.

Ein Bausatz von Riemenscheiben zur Herstellung eines Riemengetriebes in einer Seilbahnanlage besteht aus einer Vielzahl von aus Stahlblech hergestellten Riemenscheiben, welche unterschiedliche Durchmesser aufweisen und welche mit einer durch Spaltung des ringsumlaufenden Randes hergestellten Riemenfläche ausgebildet sind, wobei sie wahlweise miteinander verbindbar sind.

Der Gegenstand der Erfindung ist nachstehend anhand von zwei in der Zeichnung dargestellten Ausführungsbeispielen näher erläutert. Es zeigen:
- FIG.1: eine Station einer Seilbahnanlage mit kuppelbaren Fahrzeugen, in axonometrischer Darstellung,
- FIG.2: die paarweise angeordneten Riemenscheiben und die mit diesen auf Verdrehung verbundenen Antriebsräder für die durch diese Seilbahnstation hindurch bewegten Fahrzeuge zur Erläuterung des Bewegungsablaufes der Fahrzeuge, in schematischer Dar- stellung,
- FIG.3, FIG.3a, FIG.3b: eine erfindungsgemäße Riemenscheibe, in Draufsicht, im Schnitt nach der Linie A-A der FIG.3 und in axonometrischer Darstellung,
- FIG.4, FIG.4a, FIG.4b: drei Paare von Riemenscheiben mit jeweils einer Riemenfläche, in Seitenansicht bzw. im Schnitt, und
- FIG.5, FIG.5a, FIG.5b: drei Paare von Riemenscheiben mit jeweils zwei Riemenflächen, in Seitenansicht bzw. im Schnitt.

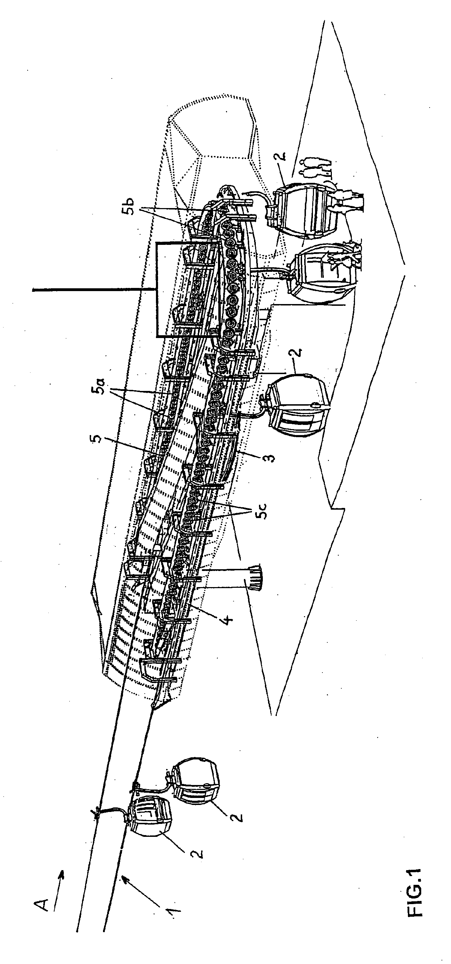

In FIG.1 ist eine der Stationen einer Seilbahnanlage mit an ein Trag- und Förderseil 1 ankuppelbaren Fahrzeugen 2 dargestellt. In dieser Station befindet sich eine Umlenkscheibe 3 für das Trag- und Förderseil 1, welches mit einer konstanten Geschwindigkeit von z.B. 6m/sec bewegt wird. Die mittels des Trag- und Förderseiles 1 in Richtung des Pfeiles A in die Station hineinbewegten Fahrzeuge 2 werden vom Trag- und Förderseil 1 abgekuppelt und längs einer Führungsschiene 4 mittels Antriebsrädern 5, nämlich Verzögerungsrädern 5a, Förderrädern 5b und Beschleunigungsrädern 5c, durch die Station hindurch bewegt. Mittels der Verzögerungsräder 5a werden die Fahrzeuge 2 von der Geschwindigkeit des Trag- und Förderseiles 1 auf eine Geschwindigkeit von z.B. 0,2 m/sec bis 1m/sec verzögert, mit welcher Geschwindigkeit sie mittels der Förderräder 5b durch einen Ein- und Ausstiegsbereich für die Passagiere hindurch bewegt werden. In diesem Bereich, durch welchen sie mit einer konstanten Geschwindigkeit hindurch bewegt werden, werden die Fahrzeuge 2 von den Passagieren bestiegen bzw. von diesen verlassen. In der Folge werden die Fahrzeuge 2 mittels der Beschleunigungsräder 5c auf die Geschwindigkeit des Trag- und Förderseiles 1 beschleunigt, worauf sie wieder an dieses angekuppelt und von diesem aus der Seilbahnstation hinaus gefördert werden.

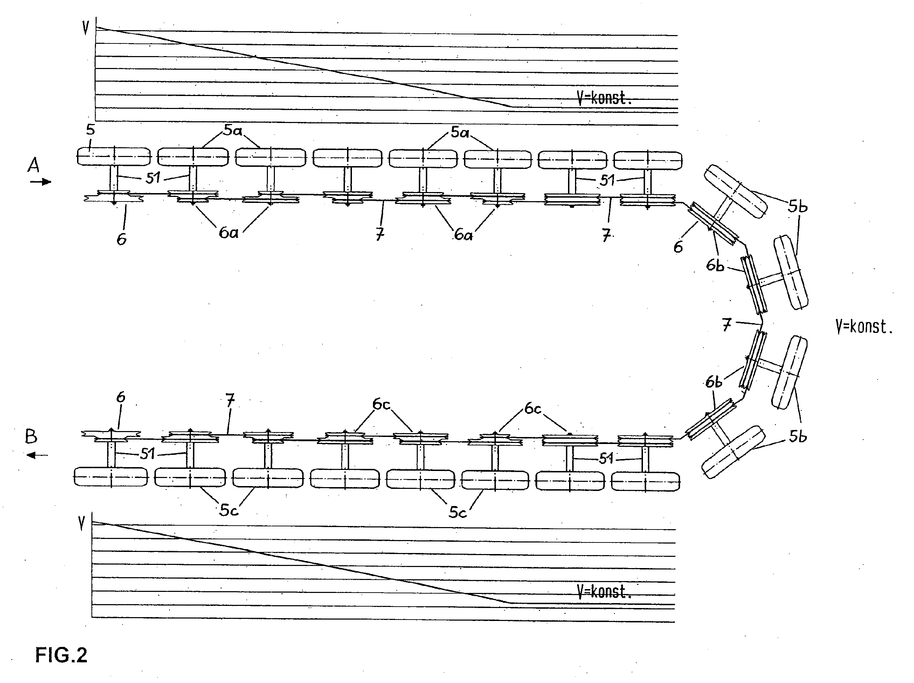

In FIG.2 sind die Antriebsräder 5, nämlich die Verzögerungsräder 5a, die Förderräder 5b, die Beschleunigungsräder 5c, und die Paare der Riemenscheiben 6 sowie die Geschwindigkeiten V der Fahrzeuge in der Seilbahnstation schematisch dargestellt.

Wie daraus ersichtlich ist, befinden sich die Antriebsräder 5 auf Antriebswellen 51 von Paaren von Riemenscheiben 6, welche durch zwei in ihren Durchmessern unterschiedlichen oder gleichen Riemenscheiben mit ringförmigen Riemenflächen für jeweils zwischen zwei aufeinanderfolgenden Paaren von Riemenscheiben 6 vorgesehene Antriebsriemen 7 ausgebildet sind. Dabei weisen die in Bewegungsrichtung A der Fahrzeuge befindlichen jeweils ersten Riemenscheiben kleinere Durchmesser als die mit diesen gekuppelten zweiten Riemenscheiben auf, wodurch die jeweils folgenden Paare von Riemenscheiben 6a und die von diesen verdrehten Antriebsräder 5a mit abnehmenden Geschwindigkeiten verdreht werden, sodass diese Antriebsräder 5a für die Fahrzeuge als Verzögerungsräder wirken. Demnach wird die Geschwindigkeit, mit welcher die Fahrzeuge in diesem Bereich der Seilbahnstation bewegt werden, vermindert.
In weiterer Folge sind Paare von Riemenscheiben 6b vorgesehen, deren Riemenscheiben gleiche Durchmesser aufweisen, wodurch die von diesen angetriebenen Förderräder 5b mit einer gleichbleibenden Geschwindigkeit verdreht werden und somit die Fahrzeuge mit einer konstanten Geschwindigkeit durch den Ein- und Ausstiegsbereich für die Passagiere hindurch bewegt werden, wobei sie von diesen bestiegen bzw. verlassen werden.
In der Folge sind Paare von Riemenscheiben 6c vorgesehen, deren Riemenscheiben wiederum unterschiedliche Durchmesser aufweisen, wobei die Durchmesser der mittels der Antriebsriemen 7 miteinander gekuppelten Riemenscheiben jeweils größer sind als die Durchmesser der nachfolgenden Riemenscheiben, wodurch die mit diesen Paaren von Riemenscheiben 6c gekuppelten Antriebsräder 5c für die Fahrzeuge mit sich vergrößernden Geschwindigkeiten verdreht werden, wodurch sie für die Fahrzeuge als Beschleunigungsräder wirken. Mittels dieser Antriebsräder 5c werden die Fahrzeuge auf die Geschwindigkeit des Trag- und Förderseiles beschleunigt, worauf sie an dieses angekuppelt und von diesem in Richtung des Pfeiles B aus der Seilbahnstation hinaus gefördert werden.

Die anhand der FIG.1 und 2 erläuterten konstruktiven Gestaltungen sind aus dem Stand der Technik bekannt. Bei den bekannten Seilbahnanlagen sind die einzelnen Riemenscheiben in einem Gussverfahren hergestellt. Da die einzelnen Riemenscheiben eine Vielzahl von unterschiedlichen Durchmessern aufweisen, besteht das Erfordernis, eine Vielzahl von unterschiedlich ausgebildeten Riemenscheiben herzustellen, wofür eine Vielzahl von Gussformen erforderlich ist. Zudem müssen diese Riemenscheiben nach dem Gießverfahren spanabhebend bearbeitet werden. Es besteht somit das Bestreben, derartige Riemenscheiben billiger herzustellen.

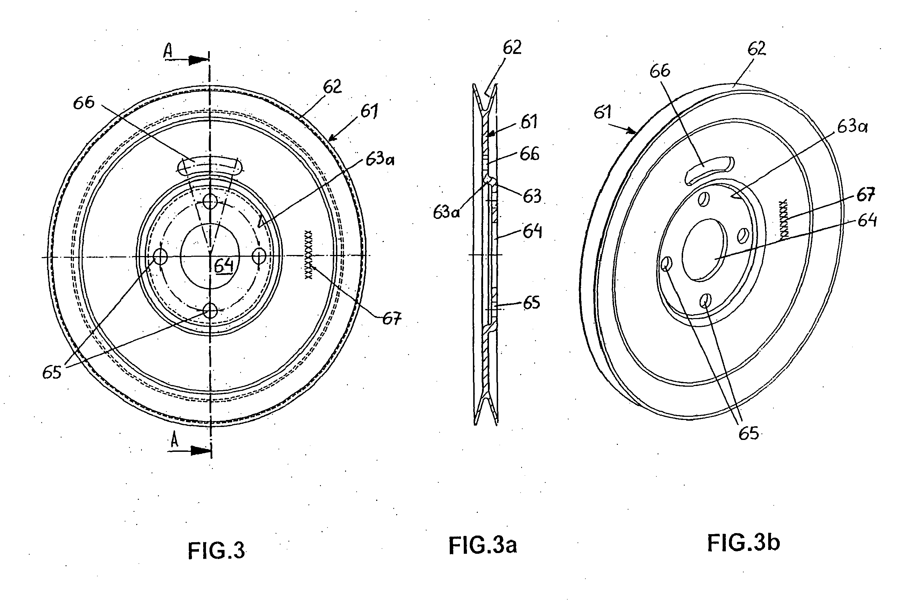

Dies wird dadurch erzielt, dass die in ihren Durchmessern unterschiedlich dimensionierten Riemenscheiben aus einem Stahlblech bestehen, wobei die Riemenflächen dadurch hergestellt sind, dass der ringsumlaufende Rand der Riemenscheibe gespalten ist, wodurch eine insbesonders keilförmige Nut hergestellt ist, welche die Riemenfläche bildet. Zwei derartige Riemenscheiben, welche miteinander verbunden sind, bilden ein Paar von Riemenscheiben für ein Riemengetriebe. Eine solche Riemenscheibe ist in den FIG.3, FIG.3a und FIG.3b dargestellt.
Diese Riemenscheibe 61 besteht aus einer aus Stahlblech mit einer Dicke von z.B. 6 mm hergestellten kreisförmigen Scheibe, welche durch Stanzung hergestellt ist und welche längs ihrer Berandung mit einer keilförmigen Nut 62 ausgebildet ist, die als Riemenfläche für einen Keilriemen dient. Diese Nut 62 ist durch Spaltung des ringsumlaufenden Randes der Riemenscheibe hergestellt. In ihrem mittleren Bereich ist diese Riemenscheibe 61 mittels eines Zieh- oder Pressverfahrens mit einer kreiszylindrischen Auswölbung 63 bzw. Ausnehmung 63a ausgebildet, deren Tiefe angenähert der halben Breite der Keilnut 62 gleich ist, sodass die äußere Wandung der Auswölbung 63 mit der äußeren Kante der Keilnut 62 in einer Ebene liegt. Im Zentrum der Auswölbung 63 ist diese Riemenscheibe 61 mit einer Nabe 64 ausgebildet. Weiters ist die Auswölbung 63 mit vier Bohrungen 65 ausgebildet, welche für Schraubbolzen vorgesehen sind. Zudem ist die Riemenscheibe 61 einerseits mit einem Langloch 66, welches als Sichtfenster dient, und andererseits auf beiden Seiten mit einer Beschriftung 67, welche Angaben über die Dimension diese Riemenscheibe 61 enthält, ausgebildet.

Derartige Riemenscheiben 61 werden als Bausatz in einer Vielzahl von gleichen Breiten und gleichen Dimensionen der keilförmigen Nut, jedoch mit unterschiedlichen Durchmessern hergestellt und auf Lager gehalten.

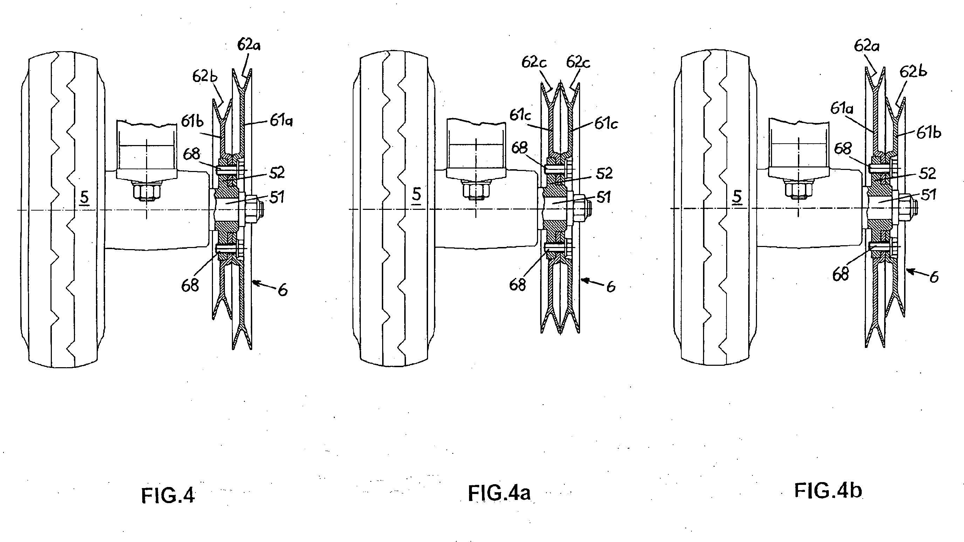

Wie dies nachstehend anhand der FIG.4, FIG.4a und FIG.4b erläutert ist, werden zur Herstellung von Paaren von Riemenscheiben 6 jeweils zwei derartige Riemenscheiben 61 miteinander kombiniert und auf die Antriebswelle 51 für ein Antriebsrad 5 aufgesetzt.
In FIG.4 ist ein erstes Paar von Riemenscheiben 6 dargestellt, welche aus zwei Riemenscheiben 61a und 61b besteht, wobei der Durchmesser der Riemenscheibe 61a mit der Nut 62a wesentlich größer ist als der Durchmesser der Riemenscheibe 61b mit der Nut 62b.
In FIG.4b sind zwei Riemenscheiben 61c mit Nuten 62c miteinander kombiniert, welche gleiche Durchmesser aufweisen.
In FIG.4c sind zwei Riemenscheiben 61a und 61b mit Nuten 62a und 62b miteinander kombiniert, deren Durchmesser denjenigen des Paares der Riemenscheiben 6 gemäß
FIG.4 gleich sind, wobei sich jedoch die Riemenscheibe 61b auf der vom Antriebsrad 5 abgewandten Seite befindet.

Demnach werden zur Herstellung von Paaren von Riemenscheiben jeweils zwei derartige Riemenscheiben 61 mit den Außenflächen der Auswölbungen 63 aneinander gefügt und auf die Antriebswelle 51, welche mit einem Flansch 52 ausgebildet ist, so aufgesetzt, dass sich der Flansch 52 in der Ausnehmung 63a befindet. Weites werden die beiden Riemenscheiben 61 mittels Schraubbolzen 68, welche den Flansch 52 durchsetzen, an der Antriebswelle 51 befestigt. Dabei wird die gegenseitige Drehlage der beiden Riemenscheiben 61 so gewählt, dass sich das Sichtfenster 66 der einen Riemenscheibe 61 über der Beschriftung 67 der anderen Riemenscheibe 61 befindet. Die bei dieser Riemenscheibe 61 vorgesehene seitliche Auswölbung 63 dient als Abstandhalter zwischen den aneinander liegenden Riemenscheiben 61. Jeweils zwei aufeinander folgende derartige Paare von Riemenscheiben 61, welche mittels eines Keilriemens 7 miteinander gekuppelt sind, bilden ein Riemengetriebe für die Antriebsräder 5 in ihrer Funktion als Verzögerungsräder, als Förderräder bzw. als Beschleunigungsräder.
Ergänzend wird darauf verwiesen, dass die Riemenscheiben 61 etwa zwanzig unterschiedliche Durchmesser aufweisen können.

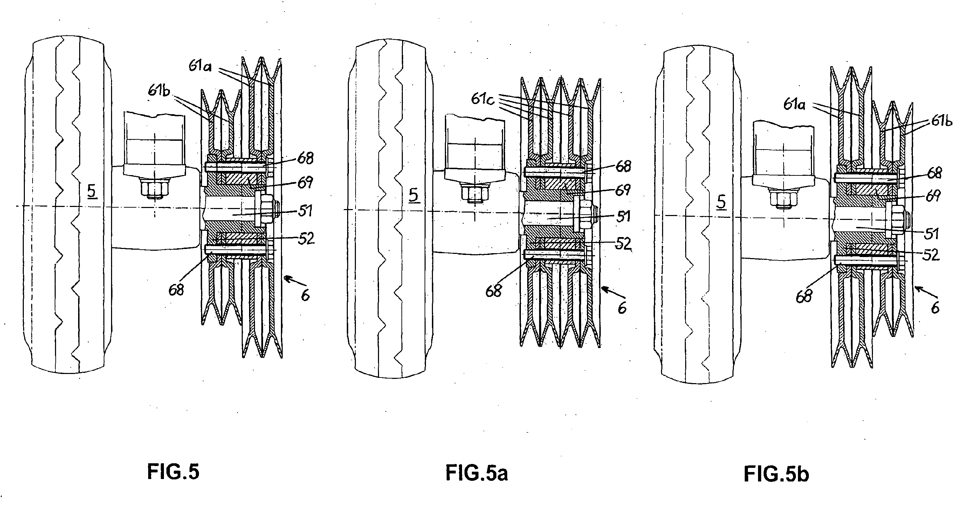

Wie dies weiters in den FIG.5, FIG.5a und FIG.5b dargestellt ist, können mit derartigen Riemenscheiben 61 auch Paare von Riemenscheiben für Riemengetriebe hergestellt werden, welche für jeweils doppelte Antriebsriemen bestimmt sind. Sofern vier Riemenscheiben 61 miteinander kombiniert werden, ist es erforderlich, zwischen die beiden Paare von Riemenscheiben 61 ringförmige Abstandhalter 69 einzufügen.

Durch einen Bausatz von derartigen Riemenscheiben aus Stahlblech kann somit eine Vielzahl von Riemenscheiben für Riemengetriebe hergestellt werden, wodurch eine maßgebliche Vereinfachung in der Erzeugung von Riemenscheiben für Riemengetriebe erzielbar ist.

Durch die Herstellung von Riemenscheiben aus Stahlblech werden gegenüber der Herstellung in einem Gussverfahren die Vorteile erzielt, dass ein wesentlich geringerer Materialaufwand besteht und dass weiters die Herstellung wesentlich einfacher und dadurch billiger ist.

## Patentansprüche

1. Riemenscheibe (61) für die Herstellung eines Riemengetriebes, insbesondere für den Antrieb von Verzögerungsrädern (5a), Förderrädern (5b) und Beschleunigungsrädern (5c) in Seilbahnanlagen, welche in ihrem mittleren Bereich mit einer Nabe (64) zu deren Verbindung mit einer Antriebswelle (51) und an ihrem Umfang mit einer ringförmigen Riemenfläche (62), insbesondere einer Nut, für einen Antriebsriemen (7) od.dgl. ausgebildet ist, **dadurch gekennzeichnet, dass** die Riemenscheibe (61) aus Stahlblech besteht und dass die an deren Umfang vorgesehene Riemenfläche (62) durch Spaltung des Randes der Riemenscheibe (61) hergestellt ist.

2. Riemenscheibe (61) nach Patentanspruch 1, **dadurch gekennzeichnet, dass** deren mittlerer Bereich mit einer Auswölbung (63a) ausgebildet ist, mit welcher sie auf einen radialen Flansch (52) der Antriebswelle (51) aufsetzbar ist.

3. Riemenscheibe (61) nach Patentanspruch 2, **dadurch gekennzeichnet, dass** die Tiefe der Auswölbung (63a) in axialer Richtung der halben Breite der Riemenfläche (62) für den Antriebsriemen (7) angenähert gleich ist.

4. Riemenscheibe (61) nach einem der Patentansprüche 1 bis 3, **dadurch gekennzeichnet, dass** zur Bildung eines Riemengetriebes zwei Riemenscheiben (61) längs der Seitenflächen der Auswölbungen (63a) aneinander zur Anlage gebracht werden.

5. Riemenscheibe (61) nach einem der Patentansprüche 1 bis 4, **dadurch gekennzeichnet, dass** zur Bildung eines Riemengetriebes zwei aneinander liegende Riemenscheiben (61) mittels axial ausgerichteter Bolzen (68) miteinander verbunden werden.

6. Riemenscheibe (61) nach einem der Patentansprüche 1 bis 5, **dadurch gekennzeichnet, dass** sie einerseits mit einer durchgehenden Ausnehmung (66) und andererseits mit einer Beschriftung (67), welche durch die Ausnehmung (66) der anliegenden Riemenscheibe (61) hindurch sichtbar ist, ausgebildet ist.

7. Bausatz von Riemenscheiben zur Herstellung eines Riemengetriebes in einer Seilbahnanlage nach einem der Patentansprüche 1 bis 6, **dadurch gekennzeichnet, dass** er aus einer Vielzahl von aus Stahlblech hergestellten Riemenscheiben (61a, 62a, 63a) besteht, welche unterschiedliche Durchmesser aufweisen und welche wahlweise miteinander verbindbar sind.
